# EUROPÄISCHE PATENTSCHRIFT

(11) **EP 1 412 279 B1**
(45) Veröffentlichungstag und Bekanntmachung des Hinweises auf die Patenterteilung: **03.11.2004**
(21) Anmeldenummer: 02777111.2
(22) Anmeldetag: 14.09.2002
(51) Int. Cl.: B67C 7/00

(54) **ETIKETTIERMASCHINE**
LABELLING MACHINE
MACHINE D'ETIQUETAGE

(30) Priorität: 14.09.2001 DE 10145455
(43) Veröffentlichungstag der Anmeldung: 28.04.2004
(60) Teilanmeldung: 04012550.2
(73) Patentinhaber: KRONES AG, 93068 Neutraubling (DE)
(72) Erfinder: EDER, Erich, 93093 Donaustauf (DE)
(86) Internationale Anmeldenummer: PCT/EP2002/010338
(87) Internationale Veröffentlichungsnummer: WO 2003/024861

(56) Entgegenhaltungen:
- DE-C- 944 922
- US-A- 4 479 343

## Beschreibung

Die Erfindung betrifft eine Maschine zum Ausstatten von Artikeln (Flaschen, Dosen oder dgl.) gemäß dem Oberbegriff des Anspruchs 1.

Eine derartige Maschine ist z.B. aus DE 197 41 476 bereits bekannt.

Bei konventionell ausgeführten Etikettiermaschinen befinden sich alle wesentlichen Baugruppen (Karussell, Transportelemente, Etikettieraggregate usw.) auf einer großen gemeinsamen Tischplatte, die sozusagen die Maschinenbasis bildet. Ungünstig ist die raumgreifende Bauweise und schlechte Zugänglichkeit zu den einzelnen Baugruppen, was Wartungs- und Reinigungsarbeiten erschwert.

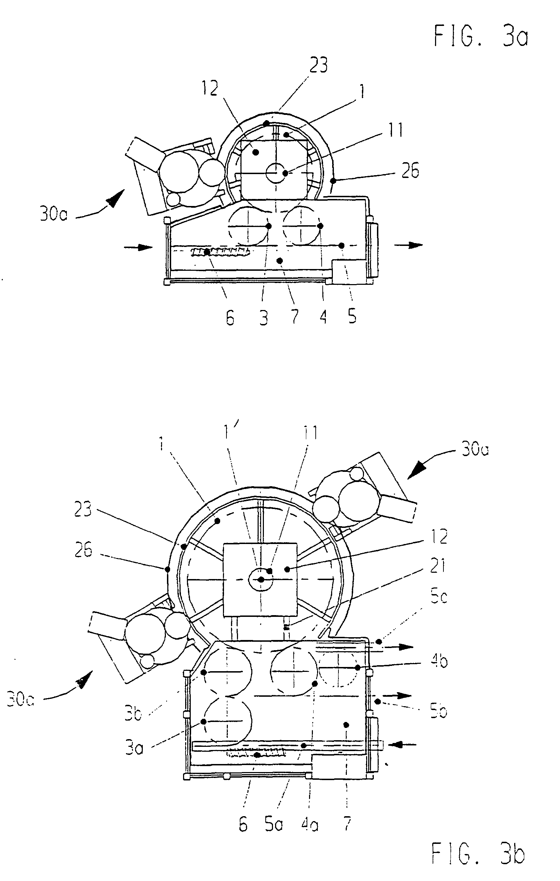

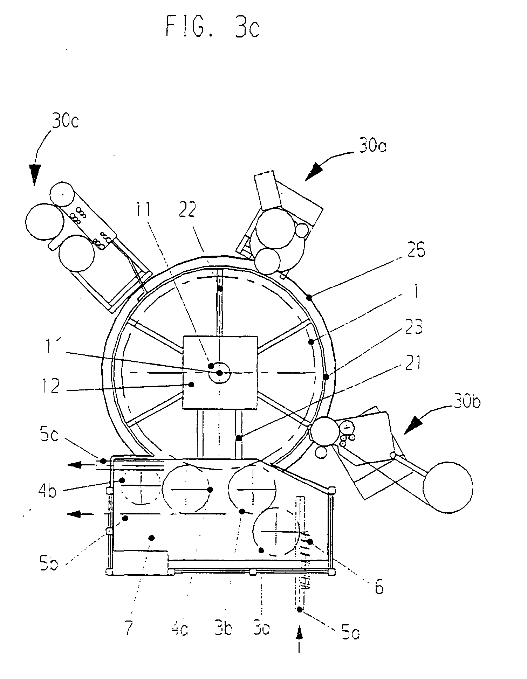

Durch DE 31 34 661 A1 wurde bereits vorgeschlagen, ein mittenfreies Behandlungskarussell zusammen mit den Transportelementen zum Zu- und Abführen der Artikel sowie den Etikettieraggregaten auf einer verkürzten Tischplatte zu lagern (Fig. 3). Trotz der vorgeschlagenen Verkürzung ist die verbleibende Tischplatte immer noch verhältnismäßig groß und aufwändig. Hauptnachteil ist jedoch die - wie bei den meisten konventionell ausgeführten Etikettiermaschinen - fehlende Flexibilität in Bezug auf spätere Änderungen der Maschinenkonfiguration. Diese sind in der Regel mit einem erheblichen Aufwand verbunden, so dass häufig eine neue Maschine kostengünstiger ist als ein tiefgreifender Umbau einer bestehenden Maschine.

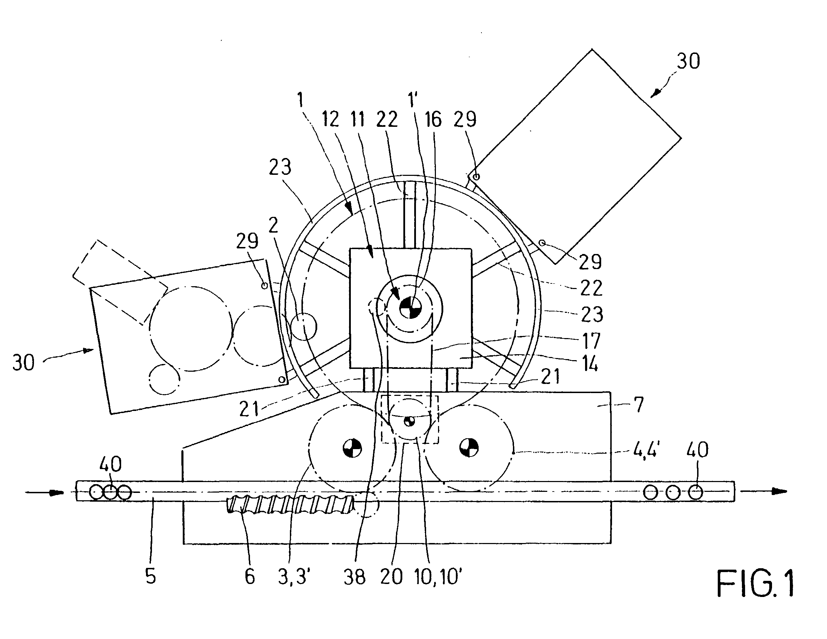

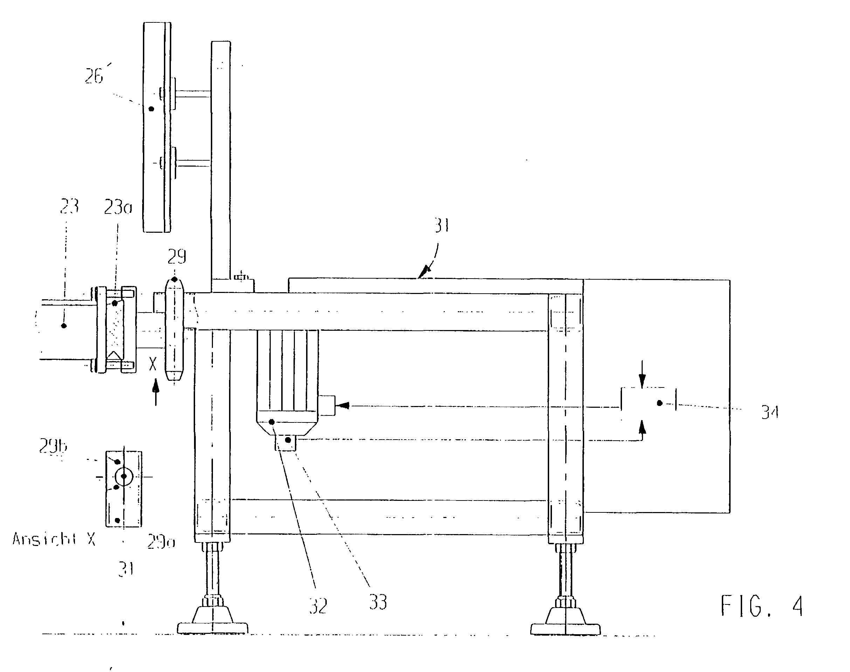

Aus DE 197 41 476 A1 ist ferner bekannt, bei einer Etikettiermaschine das Behandlungskarussell, die Transportelemente zum Zu- und Abführen der zu etikettierenden Artikel sowie die Etikettieraggregate anstelle auf einer gemeinsamen Tischplatte (Fig. 1) jeweils separat auf eigenen Untergestellen (Fig. 4) anzuordnen. Dieses System bietet im Hinblick auf eine flexible Modulbauweise für den Benutzer Vorteile, wenn alle zuvor genannten Elemente der Maschine jeweils durch einen eigenen motorischen Antrieb beaufschlagbar sind, verursacht aber einen erhöhten antriebstechnischen Aufwand.

Demgegenüber liegt der Erfindung die Aufgabe zugrunde, eine einfache und kostengünstige Maschine zum Ausstatten von Artikeln anzugeben, die eine hohe Flexibilität und gute Zugänglichkeit aufweist.

Gelöst wird diese Aufgabe durch die Merkmale des Anspruchs 1.

Dadurch, dass nur die die Artikel zum Karussell zu- und abführenden Transportelemente (Einlauf-, Auslaufsternräder, Einteilschnecke, Förderbänder) auf einer gemeinsamen Tischplatte gelagert sind, kann diese vorteilhafterweise sehr kompakt gehalten werden, wobei die Antriebselemente (Motor, Zahnräder, Zugmittelgetriebe, Wellen oder dgl.) günstiger Weise an der Unterseite der Tischplatte befestigbar sind, während das eigentliche Karussell zur Behandlung der Artikel beim Ausstattungsvorgang mit seinem Drehlager außerhalb der Tischplatte separat für sich auf einem eigenen Traggestell angeordnet ist.

Diese Lösung erlaubt die Realisierung eines kostengünstigen Antriebssystems für die Transportelemente mit nur einem motorischen Antrieb, während die Weiterverzweigung der Kraftübertragung in erwähnter Weise durch mechanische Elemente erfolgt. Zugleich ist eine gute Zugänglichkeit des freistehenden Behandlungskarussells und der einzelnen ebenfalls freistehenden Etikettieraggregate gegeben, die am Umfang des Karussells an beliebigen Positionen in Abhängigkeit der gewünschten Ausstattungsvarianten platzierbar sind. Diese Etikettieraggregate können unterschiedlicher Ausführung (Nassleim-Aggregat, Heißleim-Aggregat, Spende-Aggregat für Selbstklebeetiketten, Etikettieraggregat für Rollenetiketten oder dgl.) sein und jeweils über ein eigenes Untergestell, ggf. auch über jeweils mindestens einen eigenen motorischen Antrieb verfügen.

An der Peripherie des Karussells sind Elemente zur Festlegung der relativen Lage der Etikettieraggregate, der Anbürstelemente und noch weiterer Maschinenbauteile zum Karussell vorhanden, die neben dem radialen Abstand auch die Höhe, Neigung und die Position am Umfang des Karussells bestimmen. Eine umständliche und ungenaue Befestigung der genannten Bauteile am Hallenboden zur Fixierung der Relativpositionen ist damit entbehrlich. Hierfür sind horizontale, ggf. in Umfangsrichtung verstellbare Ausleger am Drehlager bzw.Gestell des Karussells geeignet. Günstig ist insbesondere eine an den Karussellumfang angepaßte ringförmige Elementausführung, weil damit beliebige, stufenlose Umfangspositionierungen einfach realisierbar sind. Diese Lösung ermöglicht einen schnellen Wechsel der Etikettieraggregate und ggf. weiterer Formatteile, wie Anbürstelemente oder dgl. beim Benutzer einer Maschine, wenn eine Umstellung auf eine andere Ausstattung oder Flaschengröße erfolgen soll, insbesondere in Verbindung mit voreingestellten Wechselkupplungselementen, die eine schnelle und exakte Selbstzentrierung der entsprechenden Bauteile gewährleisten.

Auf Grund dieses Konzepts ist neben der hervorragenden Zugänglichkeit eine hohe Flexibilität für den Benutzer der Maschine und eine Vereinfachung der Herstellung und Montage für den Hersteller der Maschine durch die einzelnen Maschinenmodule gegeben, die bei Bedarf wechselbar bzw. individuell kombinierbar sind.

Das separat stehende Drehlager des Karussells kann durch eine tischartige Gestellkonstruktion gebildet werden und ggf. geneigte Oberflächen zur verbesserten Flüssigkeits- und Schmutzableitung besitzen, wodurch die Reinigung der Maschine erleichtert wird.

Günstigerweise ist die Außenkontur der tischartigen Gestellkonstruktion kleiner ausgeführt als die äußere Peripherie des Karussells und überragt diese nicht in radialer Richtung. Dadurch ist eine gute Zugänglichkeit zum Karussell sichergestellt. Lediglich ein das Karussell zumindest teilumfänglich (vom Artikelein- bis zum Artikelauslauf) umgebender Ring überragt das Karussell in einer tieferliegenden Ebene in radialer Richtung geringfügig, wodurch vorteilhafterweise gerade Stützen zum Halten von Maschinenteilen, wie Schutzverkleidungen, Anbürstkörper oder dgl. ohne Bodenkontakt direkt auf den Ring gestellt und jederzeit lös- und verstellbar befestigt werden können. An diesem Ring sind auch freistehende Etikettieraggregate an beliebigen Umfangspositionen festlegbar. Dieser Vorteil kommt auch dann noch zum Tragen, wenn die o.g. Gestellkonstruktion des Karussells und die Tischplatte für die Transportelemente einstückig ausgebildet oder diese unlösbar miteinander verbunden sind.

Weitere vorteilhafte Ausgestaltungen sind Gegenstand der verbleibenden abhängigen Ansprüche.

Nachfolgend wird ein bevorzugtes Ausführungsbeispiel anhand der Fig. erläutert. Es zeigt:
- Fig. 1: eine Draufsicht einer Ausstattungsmaschine in schematischer Darstellung,
- Fig. 2: eine Seitenansicht des Karussells der Ausstattungsmaschine nach Fig. 1 in teilweiser Schnittdarstellung,
- Fig. 3a bis 3c: mehrere Varianten einer Ausstattungsmaschine in schematischer Draufsicht,
- Fig.4: ein Untergestell eines Etikettieraggregats in vergrößerter Darstellung und
- Fig. 5: ein Detail der Ausstattungsmaschine aus Fig. 2 in vergrößerter Abbildung.

Die Ausstattungsmaschine besitzt ein Karussell 1, das in Fig. 1 nur mit seinem Teilkreis angedeutet ist und mehrere in gleichmäßigen Teilungsabständen angeordnete Drehteller 2 aufweist. Des weiteren sind ein Einlaufsternrad 3 und ein Auslaufsternrad 4 vorhanden, deren Teilkreise jeweils den Teilkreis des Karussells 1 berühren. Beide Sternräder 3 und 4 sind zwecks der besseren Übersicht in Fig. 1 ebenfalls nur durch ihre Teilkreise angedeutet. An der vom Karussell 1 wegweisenden Seite der Sternräder 3 und 4 befindet sich ein deren Teilkreise tangierendes, geradliniges Förderband 5, an dem seitlich im Bereich vor dem Einlaufsternrad 3 eine parallel ausgerichtete Einteilschnecke 6 angeordnet ist. Die Einteilschnecke 6, das Förderband 5 und die Sternräder 3, 4 sind auf einer gemeinsamen Tischplatte 7 angeordnet bzw. gelagert.

Die Sternräder 3, 4 stehen über vertikale Wellen mit unter der Tischplatte 7 drehbar gelagerten, einen mit den Sternradteilkreisen übereinstimmende Teilkreisdurchmesser aufweisenden Zahnrädern 3', 4' verdrehfest in Verbindung, die ihrerseits mit dem Antriebszahnrad 10 eines elektromotorischen Maschinenhauptantriebs 20, z.B. ein drehzahlregelbarer Asynchronmotor mit Untersetzungsgetriebe, kämmen. Koaxial zum Antriebszahnrad 10 ist ein mit diesem verdrehfest verbundenes Zahnriemenrad 10' angeordnet, das über einen Zahnriemen 17 mit einem zum Antrieb des Karussells 1 dienenden Zahnriemenrad 16 in Eingriff steht. Der Antrieb der Einteilschnecke 6 sowie ggf. auch des Förderbands 5 erfolgt durch im Detail nicht gezeigte mechanische Kraftübertragungselemente (Zahnräder, Zahnriemen und Gelenkwellen) über eines der vorgenannten Zahnräder vom Maschinenhauptantrieb 20 aus. Es versteht sich, dass der Maschinenhauptantrieb alternativ auch direkt dem Karussell 1 zugeordnet werden könnte, oder sowohl der Tisch 7 als auch das Karussell 1 jeweils einen eigenen Motor erhalten könnten, die zueinander synchronisiert sind, wobei dann der Zahnriemen 17 entbehrlich wäre.

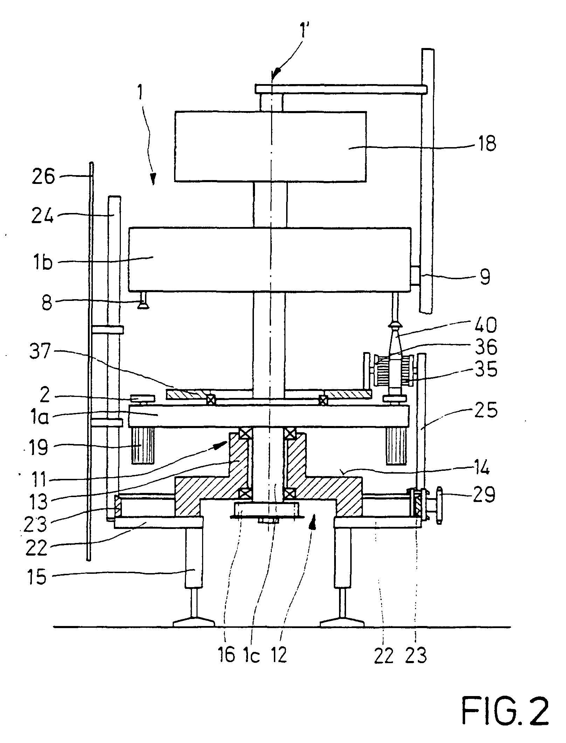

Die durch eine vertikale Mittelwelle 1c gebildete Drehachse 1' des Karussells 1 wird von einem Drehlager 11 aufgenommen, das neben der Tischplatte 7 separat für sich stehend angeordnet ist. Dieses ein tischartig ausgebildetes Gestell 12 aufweisende Drehlager 11 ist am besten in Fig. 2 erkennbar. Wie dort dargestellt, trägt das auf Stützfüßen 15 stehende Gestell 12 in einer angeformten oder aufgesetzten, innen hohlen Lagersäule 13 die Mittelwelle 1c. Die Mittelwelle 1c ist über ein an ihrem unteren Ende verdrehfest angebrachtes Zahnriemenrad 16 antreibbar.

An der Mittelwelle 1c ist unter anderem ein Drehtisch 1a und ein darüber angeordnetes, ggf. höhenverstellbares Oberteil 1b des Karussells 1 verdrehfest gelagert. Auf dem oberen Ende der Mittelwelle 1c befindet sich ein Gehäuse 18 für die Steuerung von Servomotoren 19, welche an der Unterseite des Drehtisches 1a angeordnet sind und zum programmgesteuerten Antrieb der drehbar auf dem Drehtisch 1a gelagerten Drehtellern 2 dienen. Jedem Drehteller 2 ist eine im Oberteil 1b des Karussells 1 heb- und senkbare Zentrierglocke 8 zugeordnet, die in bekannter Weise durch eine nicht dargestellte Steuerkurve betätigbar ist. Um die Steuerkurve gegen Mitdrehen zu sichern, ist eine gestellfeste Drehmomentstütze 9 vorhanden.

Zur lagerichtigen Zuordnung des Karussells 1 zu den Sternrädern 3 und 4 ist das Gestell 12 des Drehlagers 11 mit der Tischplatte 7 durch zwei den vorhandenen Zwischenraum überbrückende Streben 21 verbunden, insbesondere lösbar, beispielsweise durch Verschraubungen, Paßstifte oder andere geeignete Elemente. Erleichtert wird die Verbindung durch die höhengleiche Anordnung der Tischplatte 7 und der Tischplatte 14 des Gestells 12, die beide horizontal mit ebener Oberfläche ausgebildet sind.

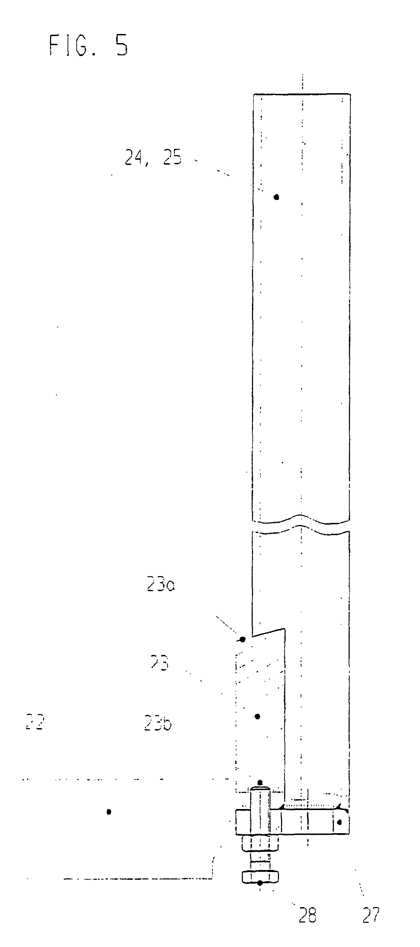

An der Unterseite der Tischplatte 14 des Gestells 12 des Drehlagers 11 sind mehrere sich horizontal radial nach außen erstreckende Ausleger 22 befestigt, die einen das Karussell 1 zumindest teilumfänglich umgebenden Ring 23 tragen. Dieser einen größeren Durchmesser als der Drehtisch 1a aufweisende, unter diesem liegende Ring 23 reicht in Umfangsrichtung dicht an die Ränder der Tischplatte 7 heran und ist an seinem oberen Rand mit einer geneigten, radial nach innen abfallenden Fläche 23a ausgestattet, während der untere Rand mit einer V-förmigen, in Umfangsrichtung verlaufenden Rille 23b versehen ist (Fig.5). An der radial äußeren Seite des Rings 23 können umfänglich an beliebiger Stelle Etikettieraggregate 30 angedockt werden. Um einerseits einen schnellen Wechsel der Etikettieraggregate 30 und andererseits eine genaue, d.h. reproduzierbare Lagezuordnung zum Karussell 1 sicherzustellen, sind lösbare Kupplungselemente mit zentrierender Funktion paarweise vorgesehen. Diese sind beispielsweise als senkrechte Bolzen oder Stifte 29 ausgebildet, an denen ein passende Bohrungen 29a aufweisendes Etikettieraggregat 30 bzw. dessen Untergestell 31 eingehängt werden kann. Die genannten Stifte 29 sind mit Klemmplatten oder dgl. an beliebiger Stelle des Rings 23 starr befestigbar. Es wäre aber denkbar, die Stifte 29 zum Andocken der Etikettieraggregate beweglich zu lagern, z. B. vertikal verschiebbar, wodurch eine Hubbewegung des Etikettieraggregats zum Anbringen oder Entfernen entfällt.

Wie aus Figur 4 ersichtlich, weist das Untergestell 31 eines Etikettieraggregats an seiner zum Ring 23 weisenden Seite ein Vierkantrohr mit Bohrungen 29a und versetzt darunter liegenden, zum Ring 23 hin offenen V-förmigen Einführschrägen 29b auf. Diese mit X bezeichnete Detailansicht ist von unten gesehen dargestellt. Mit einem Palettenhubwagen oder Gabelstapler kann das Untergestell 31 zum Einhängen an den Stiften 29 soweit angehoben werden, dass sich die Bohrungen 29a oberhalb, die Einführschrägen 29b jedoch noch unterhalb des oberen Endes der Stifte 29 befinden. Durch radiales Heranfahren an die Stifte 29 zentrieren die Einführschrägen 29b das Untergestell 31 bis die Bohrungen 29a mit den Stiften 29 axial fluchten. In dieser Stellung können die Bohrungen 29a durch Absenken des Untergestells 31 mit den Stiften 29 formschlüssig in Eingriff gebracht werden. Die exakte Höhe und Neigung ist durch einzeln höhenverstellbare Füße am Untergestell 31 einstellbar.

Auf dem Untergestell 31 ist außerdem an der zum Karussell 1 weisenden Seite eine Schutzscheibe 26' befestigt, deren Außenkontur an einen Ausschnitt in einer das Karussell umfänglich umgebenden Schutzscheibe 26 angepaßt ist. Ebenfalls an der zum Karussell 1 weisenden Seite können nicht dargestellte Andrückelemente (Schwammgeländer, -rollen oder Bürstenkörper) zum Anformen von Etiketten an die Flaschen 40 oder dgl. am Untergestell 31 befestigt sein, insbesondere - vom Karussell 1 aus gesehen- vor der Schutzscheibe 26'. Vorteilhafterweise werden dadurch bei einem Wechsel eines Etikettieraggregats automatisch auch immer die zur jeweiligen Flaschenkontur passenden Andrückelemente bereitgestellt. Zwecks der besseren Übersicht ist das Etikettieraggregat in Fig. 4 nicht abgebildet.

Der Ring 23 fungiert ferner als Träger für senkrecht auf ihm stehend angeordnete Stützen 24, 25, wobei Stützen 24 als Halterung für das Karussell 1 umfänglich umgebende Schutzscheiben 26 dienen, die entlang der Stützen 24 heb- und senkbar geführt sind, und Stützen 2,5, die als Halterung für äußere Bürstenkörper 35 zum Anstreichen von Etiketten an die Flaschenkontur vorgesehen sind. Zur Halterung innenliegender Bürstenkörper 36 ist auf dem Drehtisch 1a eine Tragscheibe 37 gelagert und gegen Verdrehen gesichert. Die Stützen 24, 25 weisen an ihren unteren Enden zur schrägen Fläche 23a des Rings 23 formschlüssig passende schräge Anfräsungen auf, so dass diese in axialer und radialer Richtung zum Ring 23 ausgerichtet und durch eine in die Rille 23b eingreifende, in einer am unteren Ende der Stützen befestigten, den Ring unterfassenden Platte 27 gehaltene Klemmschraube 28 oder sonstige lösbare Befestigung radial und axial festgelegt sind. Auch die bereits genannte Drehmomentstütze 9 kann in gleicher Weise auf dem Ring 23 verdrehfest befestigt sein (siehe Fig. 5).

Die Etikettieraggregate 30 besitzen jeweils ein eigenes Untergestell 31, das ggf. mit Rädern verfahrbar ausgebildet sein kann. Das Untergestell 31 weist eine das Etikettieraggregat 30 tragende Platte und ein Gehäuse auf, in dem ein elektromotorischer Antrieb 32 mit seiner zugeordneten Steuerung 34 untergebracht ist. Diese Steuerung 34 ist so ausgebildet, dass sie den Antrieb des Etikettieraggregats 30 stellungsgerecht, d.h. lage- und geschwindigkeitssynchron zur kontinuierlichen Drehbewegung des Karussells 1 nachfolgend regelt. Der Antrieb 32 kann ein frequenzgeregelter Asynchronmotor mit einem Drehgeber 33 zur Istwert-Rückführung an die Steuerung 34 sein. Am Karussell 1 befindet sich ein als Sollwertgeber dienender Drehgeber 38, der bei einer Drehung des Karussells 1 um einen Teilungsabstand zweier benachbarter Drehteller 2 beispielsweise 5000 Takte oder Impulse an den Eingang der Steuerung 34 des Aggregatantriebs 32 liefert, wodurch ein mit einem vorgebbaren Übersetzungsverhältnis drehwinkelgenauer, geregelter Gleichlauf zwischen einem Etikettieraggregat 30 und dem Karussell 1 realisierbar ist. Jedes Etikettieraggregat 30 kann mit schnell lösbaren Steckverbindungen zur Energie- und Druckluftversorgung sowie Signalübertragung ausgerüstet sein.

Zur Feineinstellung der Position eines Etikettieraggregats 30 kann es radial, tangential und in seiner Höhe relativ zum Drehtisch 1a verstellbar auf seinem Untergestell 31 bzw. dessen Platte gelagert sein.

Aus der Figurenfolge 3a bis 3c ist die Variabilität des Maschinenkonzepts ersichtlich. Ein vorhandenes Karussell 1 kann beliebig mit verschieden gestalteten Ein- und Auslaufkonfigurationen kombiniert werden. Einem Karussell 1 kann beispielsweise eine Tischplatte 7 mit zwei Sternrädern 3, 4 für einen geraden, in eine Förderrichtung fluchtend verlaufenden Flaschentransport 5 (Fig. 3a), oder eine Tischplatte 7 mit drei oder mehr Sternrädern 3a,3b,4a,4b für einen winkelförmigen (Fig. 3c) oder parallelen, ggf. gegenläufigen Flaschentransport 5a,5b,5c (Fig. 3b) beigestellt werden.

Daraus ergibt sich für den Benutzer einer derartigen Maschine der Vorteil, dass bei einer Veränderung eines bestehenden Anlagenlayouts einer Flaschenfülllinie die Ausstattungsmaschine durch Austausch der Tischplatte 7 bzw. des gesamten Ein- und Auslaufbereichs und Hinzufügung einer neuen Platte unter Weiterverwendung des Karussells 1 und der Etikettieraggregate ohne Anschaffung einer neuen Maschine flexibel anpaßbar ist. Es können beliebig Nassleimetikettieraggregate 30a, Rollenetikettieraggregate 30b und Spendeaggregate 30c für Selbstklebeetiketten kombiniert oder ausgetauscht werden. Die Nassleimetikettieraggregate 30a können entsprechend DE 197 41 476 A1, d.h. mit rotierenden oder oszillierenden Haftflächen zur Etikettenentnahme, ausgebildet sein. Jede dieser Haftflächen kann ggf. durch einen eigenen programmsteuerbaren elektromotorischen Antrieb betätigt werden.

Umgekehrt kann auch der Fall eintreten, dass nur das Karussell 1 zu wechseln ist; beispielsweise ein kleines Karussell durch eines mit größerem Durchmesser ersetzt wird, wenn auf eine Flasche 40 andere oder mehr Etiketten als zuvor aufgebracht werden sollen, wozu eine längere Behandlungsstrecke erforderlich sein kann. Hier können die Etikettieraggregate und die Tischplatte 7 mit dem Flaschenein- und -auslauf beibehalten werden. Es müssen allerdings dem neuen Karusselldurchmesser angepasste Streben 21 mit entsprechender Länge vorgesehen werden.

## Patentansprüche

1. Maschine zum Ausstatten von Artikeln (40) wie Gefäße oder dgl. mit wenigstens einem Karussell (1), wenigstens einem an seiner Peripherie angeordneten, freistehenden Etikettieraggregat (30) zum Ausstatten der Artikel (40) und mit synchron antreibbaren Transportelementen (3, 4, 5, 6) zum stellungsgerechten Zu- und Abführen der Artikel (40), **dadurch gekennzeichnet, dass** an der Peripherie des Karussells (1) Elemente (21, 22, 23, 29) zur Festlegung der relativen Lage wenigstens des Etikettieraggregats (30) zum Karussell (1) vorhanden sind.

2. Maschine nach Anspruch 1, **dadurch gekennzeichnet, dass** die Elemente als Ausleger (22) und/oder Streben (21) ausgebildet sind, die vorzugsweise den Karussellumfang radial nach außen überragen.

3. Maschine nach Anspruch 2, **dadurch gekennzeichnet, dass** die Ausleger (22) zumindest eine das Karussell teilumfänglich umgebende Schutzverkleidung (26) mittelbar oder unmittelbar halten und/oder tragen.

4. Maschine nach Anspruch 1, **dadurch gekennzeichnet, dass** die Elemente als ein das Karussell (1) zumindest teilumfänglich umgebender Ring (23) ausgebildet sind, der vorzugsweise von radial nach außen vom Gestell (12) des Karussells abstehenden Auslegern (22) getragen wird und insbesondere einen größeren Durchmesser als das Karussell (1) aufweist.

5. Maschine nach wenigstens einem der Ansprüche 1 bis 4, **dadurch gekennzeichnet, dass** am Umfang des Karussells (1) platzierbare Etikettieraggregate (30, 30a, 30b, 30c) andockbar sind, insbesondere durch lösbare, vorzugsweise selbstzentrierende Kupplungselemente (29, 29a, 29b).

6. Maschine nach Anspruch 4 oder 5, **dadurch gekennzeichnet, dass** der Querschnitt des Rings (23) so gestaltet ist, dass der radiale Abstand zum Karussell (1) und/oder die Neigung und/oder die Höhe der daran befestigbaren Bauteile durch Formschluß selbstzentrierend festlegbar ist.

7. Maschine nach Anspruch 6, **dadurch gekennzeichnet, dass** der Ring (23) an seiner Oberseite eine zur Horizontalen geneigte, in Umfangsrichtung verlaufende Fläche (23a) aufweist.

8. Maschine nach Anspruch 6, **dadurch gekennzeichnet, dass** der Ring (23) an seiner Unterseite wenigstens eine geneigte Fläche, insbesondere eine V-förmige, in Umfangsrichtung verlaufende Rille (23b) aufweist.

9. Maschine nach wenigstens einem der Ansprüche 1 bis 8, **dadurch gekennzeichnet, dass** die Etikettieraggregate (30, 30a, 30b, 30c) eigene, zur Bewegung des Karussells (1) synchronisierte elektromotorische Antriebe (32) aufweisen, deren Steuerung (34) vorzugsweise in ein, ein Btikettieraggregat tragendes, Untergestell (31) integriert ist.

10. Maschine nach Anspruch 9, **dadurch gekennzeichnet, dass** jedes Etikettieraggregat schnell lösbare Steckkupplungen für elektrische Energieversorgung, Signalaustausch mit einer Maschinensteuerung (38) und/oder einem dem Karussell (1) zugeordneten Drehgeber (38) und ggf. Druckluftversorgung aufweist.

11. Maschine nach wenigstens einem der Ansprüche 1 bis 10, **dadurch gekennzeichnet, dass** die Transportelemente (3, 4, 5, 6) auf einer Tischplatte (7) und das Karussell (1) in einem außerhalb der Tischplatte (7) angeordneten Drehlager (11) gelagert sind.

12. Maschine nach Anspruch 11, **dadurch gekennzeichnet, dass** das Drehlager (11) ein separat stehendes, vorzugsweise tischartiges Gestell (12) aufweist, insbesondere eine Tischplatte (14) mit einer angeformten oder aufgesetzten Lagersäule (13).

13. Maschine nach Anspruch 12 **dadurch gekennzeichnet, dass** die Lage der Tischplatten (7, 14) zueinander durch vorzugsweise Zerstörungsfrei lösbare Elemente (21) festlegbar ist.

14. Maschine nach wenigstens einem der Ansprüche 1 bis 13, **dadurch gekennzeichnet, dass** die Elemente (21, 22, 23, 29, 29a) den radialen Abstand und/oder die Höhe und/oder die Neigung und/oder die Position am Umfang des Karussells bestimmen.

15. Maschine nach wenigstens einem der Ansprüche 1 bis 14, **dadurch gekennzeichnet, dass** die Elemente einerseits als Bolzen oder Stifte (29) und andererseits als Bohrungen (29a) ausgebildet sind.

16. Maschine nach wenigstens einem der Ansprüche 1 bis 15, **dadurch gekennzeichnet, dass** ein Etikettieraggregat (30) oder dessen Untergestell (31) an den Elementen (21, 22, 23, 29, 29a), insbesondere Bolzen oder Stiften, einhängbar ist.

17. Maschine nach Anspruch 16, **dadurch gekennzeichnet, dass** ein Etikettieraggregat (30) oder dessen Untergestell (31) durch eine Hubbewegung in eine oberhalb der gestellfesten Elemente (21, 22, 23, 29) an der Peripherie des Karussells (1) liegende Position und durch nachfolgendes Absenken mit diesen formschlüssig in Eingriff bringbar ist.

18. Maschine nach Anspruch 15 oder 16, **dadurch gekennzeichnet, dass** die Bolzen oder Stifte (29) beweglich gelagert sind, vorzugsweise vertikal verschiebbar.

19. Maschine nach wenigstens einem der Ansprüche 1 bis 18, **dadurch gekennzeichnet, dass** zum Zentrieren eines Etikettieraggregats (30) oder eines das Etikettieraggregat tragenden Untergestells (31) relativ zum Karussell (1) Einführschrägen (29b) vorhanden sind.

20. Maschine nach wenigstens einem der Ansprüche 1 bis 19, **dadurch gekennzeichnet, dass** das Etikettieraggregat (30) von einem verstellbaren Untergestell (31) getragen wird, dessen Höhe und/oder Neigung einstellbar ist.

21. Maschine nach wenigstens einem der Ansprüche 1 bis 20, **dadurch gekennzeichnet, dass** das Etikettieraggregat (30) von einem verfahrbar ausgebildeten Untergestell (31) getragen wird.

22. Maschine nach wenigstens einem der Ansprüche 1 bis 21, **dadurch gekennzeichnet, dass** das Etikettieraggregat (30) von einem Untergestell (31) getragen wird und auf diesem radial und/oder in seiner Höhe relativ zum Karussell (1) verstellbar gelagert ist.

23. Maschine nach wenigstens einem der Ansprüche 1 bis 10 oder 14 bis 22, **dadurch gekennzeichnet, dass** das Karussell (1) und die Transportelemente (3, 4, 5, 6) auf einer Tischplatte angeordnet sind, deren Außenkontur so ausgestaltet ist, dass an der Peripherie des Karussells im Bereich vom Artikeleinlauf bis zum Artikelauslauf freistehende Etikettieraggregate (30) platzierbar sind.

## Claims

1. Machine for fitting articles (40) such as containers or the like with at least one revolving unit (1), at least one peripherally arranged free-standing labelling unit (3) for fitting to the article (40) and with synchronously driven transport elements (3, 4, 5, 6) for correctly positioned delivery and removal of the articles (40), **characterised in that** at the periphery of the revolving unit (1) are arranged elements (21, 22, 23, 29) for securing the relative position of at least the labelling unit (30) relative to the revolving unit (1).

2. Machine according to Claim 1, **characterised in that** the elements are designed as jibs (22) and/or webs (21) which preferably protrude the periphery of the revolving unit in a radially outward direction.

3. Machine according to Claim 2, **characterised in that** the jibs (22) directly or indirectly hold and/or support at least one protective panel (26) which in parts peripherally covers the revolving unit.

4. Machine according to Claim 1, **characterised in that** the elements are designed as a ring (23) which at least in parts peripherally surrounds the revolving unit (1) which is preferably supported by jibs (22) which protrude outwards from the frame (12) of the revolving unit and in particular have a larger diameter than then revolving unit (1).

5. Machine according to at least one of Claims 1 to 4, **characterised in that** synchronised labelling units (30, 30a, 30b , 30c) can be docked on the periphery of the revolving unit (1), in particular by detachable, preferably self-centring coupling elements (29, 29a, 29b).

6. Machine according to Claim 4 or 5, **characterised in that** the cross-section of the ring (23) is designed in such a manner that the radial distance to the revolving unit (1) and/or the slant and/or the height of a thereto mounted assembly component are in a self-centring manner secured by positive connection.

7. Machine according to Claim 6, **characterised in that** the ring (23) has at its top side a surface (23a) which is slanted towards the horizontal and extends in the peripheral direction.

8. Machine according to Claim 6, **characterised in that** the ring (23) has at its bottom side at least one slanted surface, in particular a V-shaped groove (23b) extending in the peripheral direction.

9. Machine according to at least one of Claims 1 to 8, **characterised in that** the labelling units (30, 30a, 30b, 30c) have their own electric motor drives (32) which are synchronised for moving the revolving unit (1), and their control (34) is preferably integrated into a sub-frame (31) which supports a labelling unit.

10. Machine according to Claim 9, **characterised in that** each labelling unit comprises quick-release plug connections for electric power supply, exchange of signals with a machine control (38) and/or a rotator (38) associated with the revolving unit (1) and, if appropriate, a compressed air supply.

11. Machine according to at least one of Claims 1 to 10, **characterised in that** the transport elements (3, 4, 5, 6) are mounted on a table top (7), and the revolving unit (1) is mounted in a rotary mount (11) arranged outside the table top (7).

12. Machine according to Claim 11, **characterised in that** the rotary mount (11) comprises a separately standing, preferably table like frame (12), in particular a table top (14) with an integrated or added mounting column (13).

13. Machine according to Claim 12, **characterised in that** the position of the table tops (7, 14) relative to each other is fixed by preferably indestructibly detachable elements (21).

14. Machine according to at least one of Claims 1 to 13, **characterised in that** the elements (21, 22, 23, 29, 29a) determine the radial gap and/or the height and/or the slant and/or the position on the periphery of the revolving unit.

15. Machine according to at least one of Claims 1 to 14, **characterised in that** the elements are on the one hand designed as bolts or pins (29) and on the other hand as bores (29a).

16. Machine according to at least one of Claims 1 to 15, **characterised in that** a labelling unit (30) or its sub-frame (31) can be suspended on the elements (21, 22, 23, 29, 29a), in particular bolts or pins.

17. Machine according to Claim 16, **characterised in that** the labelling unit (30) or its sub-frame (31) are placed by a lifting movement into a position above the frame-mounted elements (21, 22, 23, 29) at the periphery of the revolving unit (1) and positively thereto by subsequent lowering.

18. Machine according to Claim 15 or 16, **characterised In that** the bolts or pins (29) are movably mounted, preferably vertically displaceable.

19. Machine according to at least one of Claims 1 to 18, **characterised in that** relative to the revolving unit (1) are provided inserting slants for centring a labelling unit (30) or a sub-frame (31) which supports the labelling unit.

20. Machine according to at least one of Claims 1 to 19, **characterised in that** the labelling unit (30) is supported by an adjustable sub-frame (31) the height and/or slant of which is adjustable.

21. Machine according to at least one of Claims 1 to 20, **characterised in that** the labelling unit (30) is supported by a displaceably designed sub-frame (31).

22. Machine according to at least one of Claims 1 to 21, **characterised in that** the labelling unit (30) is supported by a sub-frame (31) which is mounted so as to be adjustable radially and/or in its height relative to the revolving unit (1).

23. Machine according to at least one of Claims 1 to 10 or 14 to 22, **characterised in that** the revolving unit (1) and the transport elements (3, 4, 5, 6) are arranged on a table top the outside contour of which is designed in such a manner that free-standing labelling units (30) can be placed in the area of the article inlet up to the article outlet.

## Revendications

1. Machine pour étiqueter des articles (40) tels que des récipients ou similaires, comprenant au moins un carrousel (1), au moins une unité d'étiquetage (30) distincte disposée au niveau de la périphérie de celui-ci pour étiqueter les articles (40), et des éléments de transport (3, 4, 5, 6) à entraînement synchronisé pour amener et évacuer les articles (40) dans la bonne position,
**caractérisée en ce qu'**
au niveau de la périphérie du carrousel (1) des éléments (21, 22, 23, 29) sont prévus pour définir la position relative au moins de l'unité d'étiquetage (30) par rapport au carrousel (1).

2. Machine selon la revendication 1,
**caractérisée en ce que**
les éléments présentent la forme de bras (22) et/ou de jambes (21) qui saillent de préférence de la périphérie du carrousel radialement vers l'extérieur.

3. Machine selon la revendication 2,
**caractérisée en ce que**
les bras (22) maintiennent et/ou supportent indirectement ou directement un revêtement de protection (26) entourant une partie de la périphérie du carrousel.

4. Machine selon la revendication 1,
**caractérisée en ce que**
les éléments entourant au moins une partie de la périphérie du carrousel (1) présentent la forme d'un anneau (23) qui est de préférence porté par des bras (22) saillant du châssis (12) du carrousel radialement vers l'extérieur et présente notamment un diamètre plus grand que le carrousel (1).

5. Machine selon au moins l'une des revendications 1 à 4,
**caractérisée en ce qu'**
à la périphérie du carrousel (1) des unités d'étiquetage (30, 30a, 30b, 30c) peuvent être raccordées, notamment par des éléments de couplage (29, 29a, 29b) amovibles, de préférence à centrage automatique.

6. Machine selon la revendication 4 ou 5,
**caractérisée en ce que**
la section transversale de l'anneau (23) présente une forme telle que la distance radiale par rapport au carrousel (1) et/ou l'inclinaison et/ou la hauteur des éléments pouvant être fixés à celui-ci peut être définie à centrage automatique par complémentarité de formes.

7. Machine selon la revendication 6,
**caractérisée en ce que**
l'anneau (23), à sa face supérieure, présente une surface (23a) inclinée vers l'horizontale s'étendant dans le sens périphérique.

8. Machine selon la revendication 6,
**caractérisée en ce que**
l'anneau (23), à sa face inférieure, présente au moins une surface inclinée, notamment une rainure (23b) en forme de V s'étendant dans le sens périphérique.

9. Machine selon au moins l'une des revendications 1 à 8,
**caractérisée en ce que**
les unités d'étiquetage (30, 30a, 30b, 30c) présentent leurs propres entraînements (32) électromoteurs synchronisés pour le mouvement du carrousel (1), dont la commande (34) est de préférence intégrée dans une console (31) portant une unité d'étiquetage.

10. Machine selon la revendication 9,
**caractérisé en ce que**
chaque unité d'étiquetage présente des accouplements rapidement amovibles pour l'alimentation en énergie électrique, l'échange de signaux avec une commande de machine (38) et/ou avec un capteur de pression (38) associé au carrousel (1) et le cas échéant pour l'alimentation en air comprimé.

11. Machine selon au moins l'une des revendications 1 à 10,
**caractérisée en ce que**
les éléments de transport (3, 4, 5, 6) sont logés sur un plan de table (7) et le carrousel (1) dans un coussinet de pivotement (11) disposé à l'extérieur du plan de table (7).

12. Machine selon la revendication 11,
**caractérisée en ce que**
le coussinet de pivotement (11) présente un châssis (12) séparé, de préférence en forme d'une table, notamment un plan de table (14) avec un montant de coussinet (13) formé par moulage ou rapporté.

13. Machine selon la revendication 12,
**caractérisée en ce que**
la position des plans de table (7, 14) l'un par rapport à l'autre peut être définie par des éléments (21) de préférence amovibles sans les détruire.

14. Machine selon au moins l'une des revendications 1 à 13,
**caractérisée en ce que**
les éléments (21, 22, 23, 29, 29a) déterminent la distance radiale et/ou la hauteur et/ou l'inclinaison et/ou la position au niveau de la périphérie du carrousel.

15. Machine selon au moins l'une des revendications 1 à 14,
**caractérisée en ce que**
les éléments présentent d'une part la forme de boulons ou de broches (29) et d'autre part la forme d'alésages (29a).

16. Machine selon au moins l'une des revendications 1 à 15,
**caractérisée en ce qu'**
une unité d'étiquetage (30) ou la console (31) de celle-ci peut être suspendue aux éléments (21, 22, 23, 29, 29a), notamment à des boulons ou des broches.

17. Machine selon la revendication 16,
**caractérisée en ce qu'**
une unité d'étiquetage (30) ou la console (31) de celle-ci peut être mise en coopération par complémentarité de formes avec les éléments (21, 22, 23, 29) solidaires du châssis par un mouvement de levage dans une position située au-dessus de ceux-ci au niveau de la périphérie du carrousel (1), suivie d'un mouvement de descente.

18. Machine selon la revendication 15 ou 16,
**caractérisée en ce que**
les boulons ou broches (29) sont logés de manière mobile, de préférence à déplacement vertical.

19. Machine selon au moins l'une des revendications 1 à 18,
**caractérisée en ce que** des rampes d'introduction (29b) sont prévues pour le centrage d'une unité d'étiquetage (30) ou d'une console (31) portant l'unité d'étiquetage par rapport au carrousel (1).

20. Machine selon au moins l'une des revendications 1 à 19,
**caractérisée en ce que**
l'unité d'étiquetage (30) est portée par une console (31) réglable, dont la hauteur et/ou l'inclinaison peut être ajustée.

21. Machine selon au moins l'une des revendications 1 à 20,
**caractérisée en ce que**
l'unité d'étiquetage (30) est portée par une console (31) conçue de manière mobile.

22. Machine selon au moins l'une des revendications 1 à 21,
**caractérisée en ce que**
l'unité d'étiquetage (30) est portée par une console (31) et logée sur celle-ci de manière réglable radialement et/ou au niveau de sa hauteur par rapport au carrousel (1).

23. Machine selon au moins l'une des revendications 1 à 10 ou 14 à 22,
**caractérisée en ce que**
le carrousel (1) et les éléments de transport (3, 4, 5, 6) sont disposés sur un plan de table dont le contour extérieur présente une forme permettant de placer des unités d'étiquetage (30) distinctes au niveau de la périphérie du carrousel dans la zone allant de l'entrée des articles jusqu'à la sortie des articles.
